# DEMANDE DE BREVET EUROPEEN

(11) **EP 1 857 306 A1**
(43) Date de publication de la demande: **21.11.2007**
(21) Numéro de dépôt: 07300992.0
(22) Date de dépôt: 26.04.2007
(51) Int. Cl.: B60G 17/06, B60G 17/016

(54) **Dispositif permettant de contrôler la détente basse vitesse des amortisseurs d'un même essieu avant d'un véhicule en fonction des sollicitations en pompage et en roulis du véhicule**

(30) Priorité: 17.05.2006 WO PCT/FR2006/051787
(71) Demandeur: PEUGEOT CITROËN AUTOMOBILES S.A., 78140 Velizy Villacoublay (FR)
(72) Inventeur: Clemencon, Nicolas, 78990 Elancourt (FR)

(57) **Abrégé**

La présente invention concerne un dispositif permettant de contrôler la détente basse vitesse des amortisseurs d'un même essieu avant d'un véhicule en fonction des sollicitations en pompage et en roulis du véhicule.

Le dispositif est caractérisé en ce qu'il comprend un actionneur (26) pouvant être piloté lors du freinage en ligne droite du véhicule en abordant un virage de manière à maintenir le clapet de réglage de détente basse vitesse (35) de l'amortisseur central (5) à une position de fermeture permettant de bloquer à l'état de compression un amortisseur central (5) et de maintenir une assiette piqueuse du véhicule.

L'invention trouve application pour des véhicules automobiles de compétition.

## Description

La présente invention concerne un dispositif permettant de contrôler la détente basse vitesse des amortisseurs d'un même essieu avant d'un véhicule en fonction des sollicitations en pompage et en roulis du véhicule.

Un tel dispositif s'applique en particulier à un véhicule automobile de compétition.

On sait que les performances d'un véhicule de compétition sont en grande partie procurées par les effets aérodynamiques provoqués par ce véhicule. Notamment, les performances ou charges de la partie aérodynamique avant du véhicule, découlant d'une réglementation technique, sont très sensibles à l'assiette du véhicule.

Lors des phases de freinage du véhicule pour aborder un virage ou une courbe, le transfert de charge s'opère proportionnellement à la décélération du véhicule qui s'enfonce de l'avant de façon que le véhicule ait une assiette piqueuse et se charge aérodynamiquement dans de bonnes conditions pour aborder cette phase de freinage.

Après cette phase de freinage, se produit la plupart du temps la phase d'accélération du véhicule plus ou moins franche suivant la position du véhicule en virage ou en courbe et, par phénomène de propulsion, le véhicule se cabre, c'est-à-dire se relève de l'avant, et par conséquent se déleste aérodynamiquement de l'avant, ce qui a pour inconvénient d'occasionner une perte d'adhérence au sol du véhicule et une diminution des performances de celui-ci dans ce virage ou cette courbe.

La présente invention a pour but d'éliminer l'inconvénient ci-dessus notamment des véhicules de compétition en proposant un dispositif permettant de contrôler la détente basse vitesse des amortisseurs d'un même essieu avant d'un véhicule en fonction des sollicitations en pompage et en roulis du véhicule et qui est conçu de manière à limiter au maximum la remontée de l'avant du véhicule lors des phases de réaccélération en courbe ou en virage afin de conserver un maximum de charge aérodynamique du véhicule et, par conséquent, d'augmenter les performances de celui-ci, et de diminuer le roulis tout en gardant une certaine souplesse du train ou essieu roulant.

A cet effet, selon l'invention, le dispositif permettant de contrôler la détente basse vitesse des amortisseurs d'un même essieu avant d'un véhicule en fonction des sollicitations en pompage et en roulis du véhicule, l'essieu étant du type comprenant deux amortisseurs de suspension des roues avant droite et gauche du véhicule, un amortisseur central de contrôle du mouvement de pompage de l'essieu et dont le circuit d'alimentation en fluide comporte notamment un clapet de réglage de détente basse vitesse de l'amortisseur central, et une barre anti-roulis, est caractérisé en ce que l'amortisseur central est fixé entre le châssis du véhicule et une extrémité libre de la barre anti-roulis dont l'extrémité opposée est montée pivotante autour d'un axe transversal solidaire du châssis, l'extrémité libre de la barre anti-roulis étant solidaire de deux bras de leviers transversaux opposés dont les extrémités sont liées mécaniquement aux débattements verticaux respectivement des roues droite et gauche et aux amortisseurs de suspension d'une manière telle que les deux bras de levier de la barre anti-roulis provoquent une compression des amortisseurs de suspension et de l'amortisseur central lors d'un freinage en ligne droite du véhicule pour aborder un virage, le dispositif comprenant en outre un actionneur pouvant être piloté lors du freinage en ligne droite du véhicule pour maintenir le clapet de réglage de détente basse vitesse de l'amortisseur central à une position de fermeture permettant de bloquer à l'état de compression l'amortisseur central de manière à maintenir une assiette piqueuse du véhicule.

L'actionneur peut en outre être également piloté, lorsque le véhicule se déplace en virage après freinage en ligne droite du véhicule, de manière à maintenir le clapet à sa position fermée de blocage à l'état de compression de l'amortisseur central pour assurer le maintien de l'assiette piqueuse du véhicule et le dispositif comprend également deux moyens à clapets de réglage de la détente basse vitesse respectivement des deux amortisseurs de suspension, solidaires respectivement des deux bras de leviers de la barre anti-roulis et qui peuvent tourner avec la barre anti-roulis autour d'une came fixe en rotation relativement à la barre anti-roulis lors du déplacement en virage du véhicule de manière à forcer le clapet associé à l'amortisseur travaillant en détente de la roue à l'intérieur du virage à être maintenu à une position de fermeture s'opposant à la détente basse vitesse de cet amortisseur pour limiter la prise de roulis du véhicule.

La barre anti-roulis, qui s'étend longitudinalement au véhicule, est creuse et un axe rigide est logé coaxialement dans cette barre en ayant l'une de ses extrémités solidaire de l'extrémité de la barre anti-roulis articulée au châssis du véhicule et son extrémité opposée faisant saillie de la barre anti-roulis supportant solidairement la came.

Les deux moyens à clapets de réglage de la détente basse vitesse des deux amortisseurs de suspension sont logés dans deux boîtiers solidaires respectivement des deux bras de levier de la barre anti-roulis et comprennent chacun une tige de poussée dont une extrémité faisant saillie extérieurement du boîtier correspondant est élastiquement en appui par ressort interne de compression sur le profil de la came, lequel ressort de compression est taré pour maintenir le clapet de réglage en position de fermeture et permettre son ouverture en fonctionnement normal de la suspension et peut être comprimé lors du roulis du véhicule pour fermer le clapet de manière à s'opposer à la détente basse vitesse de l'amortisseur correspondant.

L'amortisseur central a sa tige de piston reliée articulée à l'extrémité libre de la barre anti-roulis et son cylindre relié articulé au châssis du véhicule.

Les deux bras de levier de la barre anti-roulis ont leurs extrémités reliées de façon articulée respectivement à deux bras de deux basculeurs montés pivotant au châssis du véhicule autour de deux axes parallèles à l'axe longitudinal du véhicule et chaque basculeur comprend un deuxième bras opposé relié de façon articulée à l'extrémité de la tige de piston de l'amortisseur de suspension correspondant dont le cylindre est monté articulé à un élément de suspension du véhicule, tel qu'un triangle de suspension.

Chaque extrémité d'un bras de levier de la barre anti-roulis est reliée au bras du basculeur correspondant par une biellette verticale.

Chaque basculeur comprend un troisième bras relié de façon articulée à l'élément de suspension correspondant par l'intermédiaire d'une tige transmettant au basculeur les débattements verticaux de la roue associée.

Selon un mode de réalisation, l'actionneur comprend un axe de commande monté à coulissement guidé dans un corps et dont l'extrémité sortant du corps est reliée articulée à un quatrième bras d'au moins l'un des basculeurs et l'axe de commande comprend au moins une rampe pouvant coopérer avec une tige de poussée à l'encontre de la force de rappel d'un organe élastique, tel qu'un ressort de compression, pour maintenir le clapet de réglage de détente basse vitesse de l'amortisseur central à sa position de fermeture bloquant à l'état de compression cet amortisseur.

Le corps de l'actionneur est relié articulé à un quatrième bras de l'autre basculeur de manière que lorsque le véhicule se déplace en virage, le pivotement par la barre anti-roulis des deux basculeurs respectivement dans les états de compression et de détente des deux amortisseurs de suspension selon le sens du virage provoque le déplacement en translation dans le même sens du corps et de l'axe de commande de l'actionneur pour maintenir la rampe de l'axe de commande en appui sur la tige de poussée.

L'ensemble constitué par la tige de poussée, l'organe élastique et le clapet de réglage de détente basse vitesse de l'amortisseur central est logé dans un boîtier solidaire du corps de l'actionneur.

Selon un autre mode de réalisation, l'actionneur est piloté électriquement par deux circuits électriques d'alimentation, un premier circuit comprenant deux contacteurs en série dont l'un occupe une position de fermeture ou d'ouverture suivant que la crémaillère de direction du véhicule occupe ou non sa position en ligne droite du véhicule et l'autre occupe une position de fermeture ou d'ouverture suivant que la pédale d'accélérateur du véhicule est pratiquement complètement enfoncée ou non, et un second circuit à un seul contacteur occupant une position fermée ou ouverte suivant que la pédale de frein est actionnée ou non, de sorte que lors d'un freinage en ligne droite du véhicule, seul le deuxième circuit électrique est fermé pour alimenter l'actionneur permettant le déplacement en translation guidée d'un axe de commande dans un corps solidaire du châssis, l'axe de commande comprenant une rampe pouvant coopérer avec une tige de poussée à l'encontre de la force de rappel d'un organe élastique, tel qu'un ressort de compression, pour maintenir le clapet de réglage de détente basse vitesse de l'amortisseur central à sa position de fermeture permettant de bloquer à l'état de compression cet amortisseur.

Les deux circuits électriques sont ouverts lorsque le véhicule se déplace en virage de sorte que l'actionneur n'est plus alimenté et maintient sensiblement l'axe de commande à sa position de fermeture du clapet qu'il occupait lors du freinage du véhicule.

Seul le premier circuit électrique est fermé lorsque le véhicule accélère en ligne droite pour alimenter l'actionneur permettant le déplacement en translation de l'axe de commande à une position libérant la détente basse vitesse de l'amortisseur central et ramenant le véhicule à une assiette de référence.

Avantageusement, l'actionneur comprend un moteur électrique pas à pas ou un vérin électrique pouvant entraîner en rotation un pignon en engrènement avec une crémaillère de l'axe de commande.

Le dispositif peut comprendre un clapet de libération de détente basse vitesse disposé en parallèle au clapet de réglage de détente basse vitesse de l'amortisseur central et pouvant être commandé à une position d'ouverture par la pédale d'accélérateur du véhicule pratiquement complètement enfoncée lorsque le véhicule se déplace en accélération en ligne droite pour libérer la détente basse vitesse de l'amortisseur central et permettre le retour de la suspension à sa position statique à laquelle le véhicule occupe une assiette de référence.

Le clapet de libération de détente basse vitesse est commandé en position d'ouverture à l'encontre de la force de rappel d'un organe élastique, tel qu'un ressort de compression, par un câble relié à une extrémité d'un basculeur monté pivotant au châssis du véhicule et dont l'extrémité opposée coopère avec la pédale d'accélérateur pour basculer entre deux positions respectivement d'ouverture et de fermeture de ce clapet.

En position statique de la suspension à laquelle l'amortisseur central est libre de se détendre à basse vitesse, les bras de leviers de la barre anti-roulis occupent une position sensiblement horizontale.

Les amortisseurs sont hydrauliques à double effet.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
- la figure 1 est une vue de face d'un train ou essieu avant d'un véhicule automobile pourvu d'un dispositif de contrôle de la détente basse vitesse d'amortisseur de cet essieu suivant un premier mode de réalisation de l'invention ;
- la figure 2 est une vue de côté de l'essieu avant de la figure 1 ;
- la figure 3 est une vue schématique du dispositif de l'invention en position statique ;
- la figure 4 est une vue en coupe des moyens permettant de contrôler la détente basse vitesse d'un amortisseur central et de le bloquer à sa position de compression ;
- la figure 5 est une vue en coupe des moyens associés à une barre anti-roulis permettant de limiter la prise de roulis du véhicule se déplaçant dans un virage ;
- la figure 6 est une vue agrandie de la partie cerclée en VI du dispositif de la figure 1 ;
- la figure 7 est une vue schématique semblable à celle de la figure 3 et représentant le dispositif de l'invention en position de pompage du véhicule ;
- la figure 8 est une vue semblable à celle de la figure 4 et représentant l'amortisseur central en position de maintien à l'état de compression ;
- la figure 9 est une vue schématique semblable à celle de la figure 3 et représentant le dispositif de l'invention en position de roulis lors du déplacement du véhicule en virage ;
- la figure 10 est une vue semblable à celle de la figure 6 et représentant les moyens de réglage de la détente basse vitesse des deux amortisseurs de suspension du véhicule en position de roulis ;
- la figure 11 est une semblable à celle de la figure 1 et représentant un second mode de réalisation du dispositif de l'invention ;
- la figure 12 est une vue schématique du dispositif de ce second mode de réalisation en position statique ;
- la figure 13 représente schématiquement un moyen de commande par la pédale d'accélérateur du véhicule d'une vanne ou clapet de libération de détente à sa position d'ouverture et faisant partie du dispositif de l'invention ;
- la figure 14 est une vue du dispositif du second mode de réalisation en position de pompage pur du véhicule ;
- la figure 15 est une vue semblable à celle de la figure 13 et représentant la vanne de détente en position de freinage en ligne droite du véhicule ;
- la figure 16 est une vue du dispositif du second mode de réalisation en position de roulis du véhicule se déplaçant en virage ;
- la figure 17 est une vue semblable à celle de la figure 13 et représentant la vanne de détente lorsque le véhicule se déplace dans un virage ;
- la figure 18 est une vue semblable à celle de la figure 1 et représentant un troisième mode de réalisation du dispositif de l'invention occupant une position statique ;
- la figure 19 représente les circuits électriques d'alimentation de l'actionneur du dispositif de ce troisième mode de réalisation à la position statique d'assiette de référence du véhicule ;
- la figure 20 est une vue semblable à celle de la figure 19 et représentant l'actionneur en position de pompage du véhicule ;
- la figure 21 est une vue semblable à celle de la figure 19 et représentant l'actionneur en position de déplacement en virage ou dans une chicane du véhicule ; et
- la figure 22 est une vue semblable à celle de la figure 19 et représentant l'actionneur en position d'accélération en ligne droite du véhicule.

Le dispositif de l'invention qui va être décrit dans ses différents modes de réalisation s'applique de manière non limitative à un essieu ou train avant d'un véhicule de compétition.

L'essieu avant comprend deux demi-essieux symétriques composés chacun d'un ensemble de montage de roue comportant le pneumatique, la jante, les entraîneurs de roue, le disque de frein, le bol de disque, le porte-moyeu, les roulements de roue, etc... et des éléments de suspension pouvant comporter deux triangles superposés inférieur et supérieur reliant la roue au châssis du véhicule et un combiné 1 à ressort 2 et amortisseur 3 de suspension d'une roue droite ou gauche du véhicule, ainsi qu'une biellette de direction, non représentée, contrôlant et commandant la position angulaire de la roue correspondante en braquage. Chaque amortisseur de suspension 3 est du type bi-tubes à quatre voies de réglage séparées de détente basse et haute vitesses et de compression basse et haute vitesses, comme cela est connu en soi.

Le train comprend en outre une barre anti-roulis 4 qui sera détaillée ultérieurement.

Le train est également pourvu d'un amortisseur central 5 de contrôle du mouvement de pompage du train, monté verticalement et du type bi-tubes à quatre voies de réglage séparées de détente basse et haute vitesses et de compression basse et haute vitesses. L'amortisseur central 5 a son cylindre 6 fixé en 6a de manière articulée au châssis C du véhicule autour d'un axe transversal à l'axe longitudinal de ce véhicule et sa tige de piston 7 reliée articulée par une rotule 8 à la barre anti-roulis 4 qui s'étend longitudinalement au véhicule en ayant l'une de ses extrémités montée pivotante autour d'un axe transversal 9 fixé dans un palier 10 par l'intermédiaire d'un roulement à aiguilles 11, le palier 1a étant solidaire du châssis C en dessous de l'avant de ce dernier. L'extrémité libre opposée de la barre anti-roulis 4 est reliée articulée à la tige de piston 7 de l'amortisseur central 5 qui contrôle ainsi une partie de l'assiette du véhicule.

Selon l'invention, on prévoit un dispositif permettant de contrôler la détente basse vitesse des amortisseurs 1, 5 de l'essieu avant du véhicule en fonction des sollicitations en pompage et en roulis de ce véhicule.

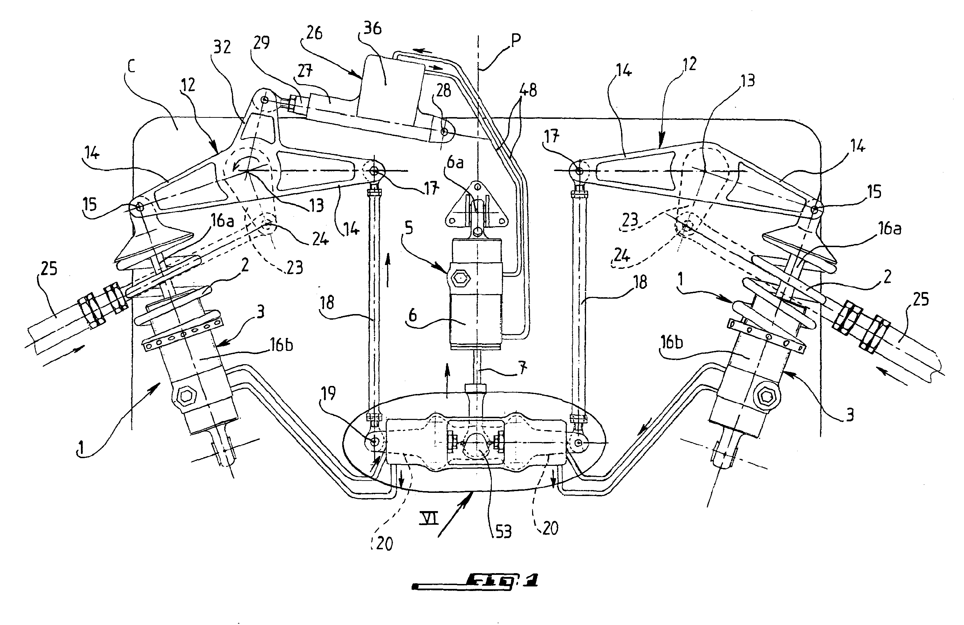

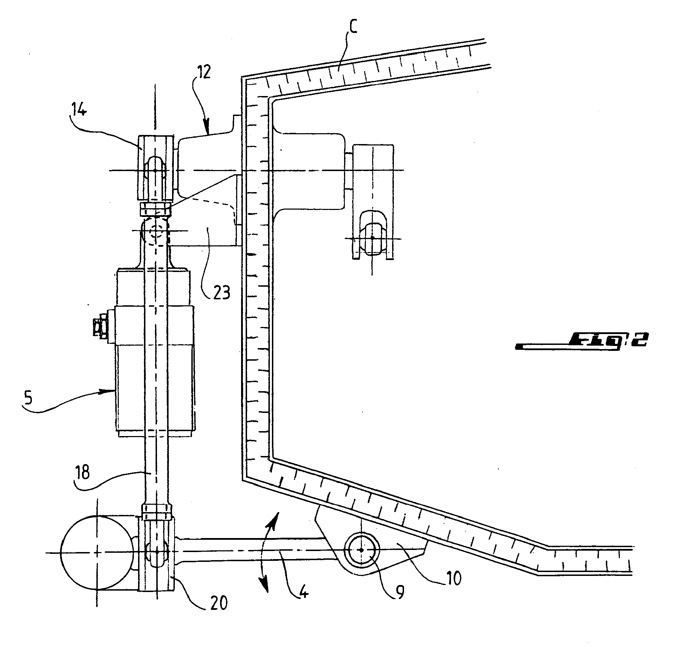

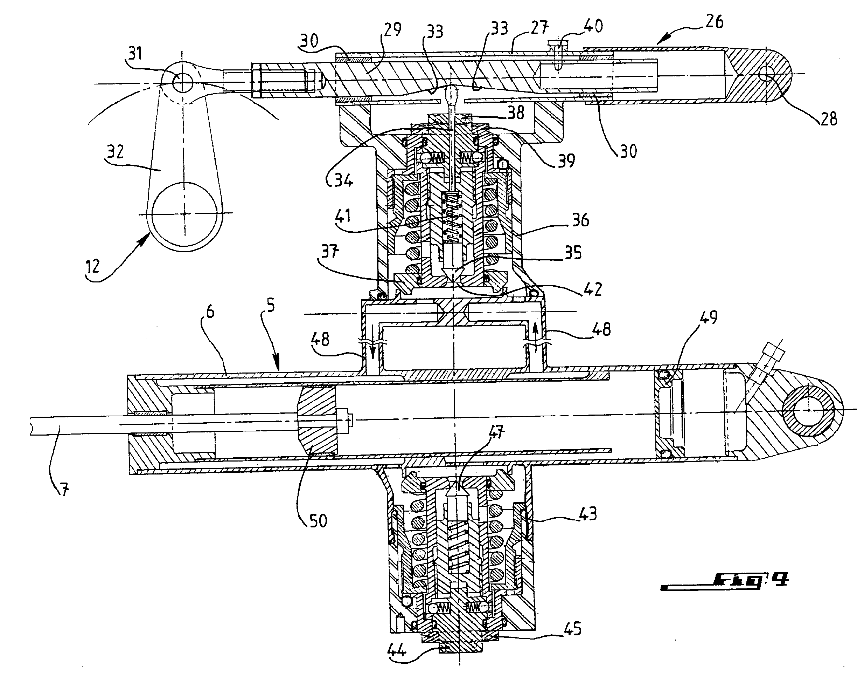

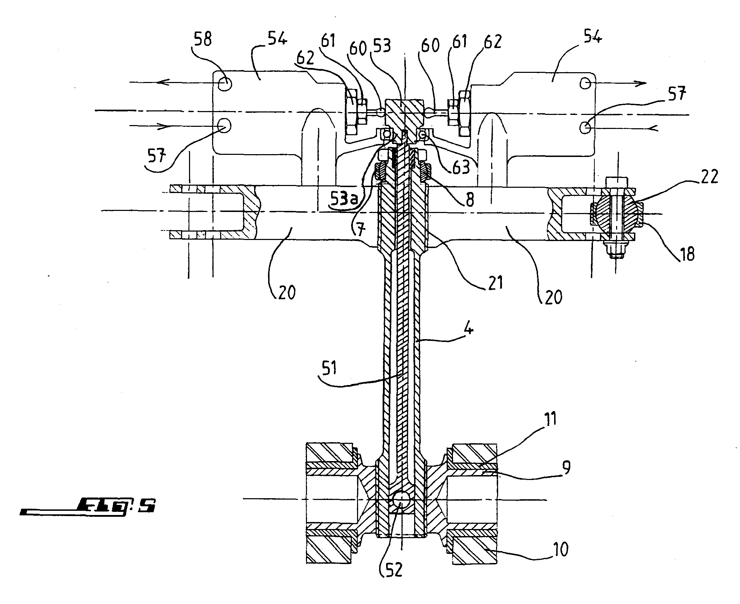

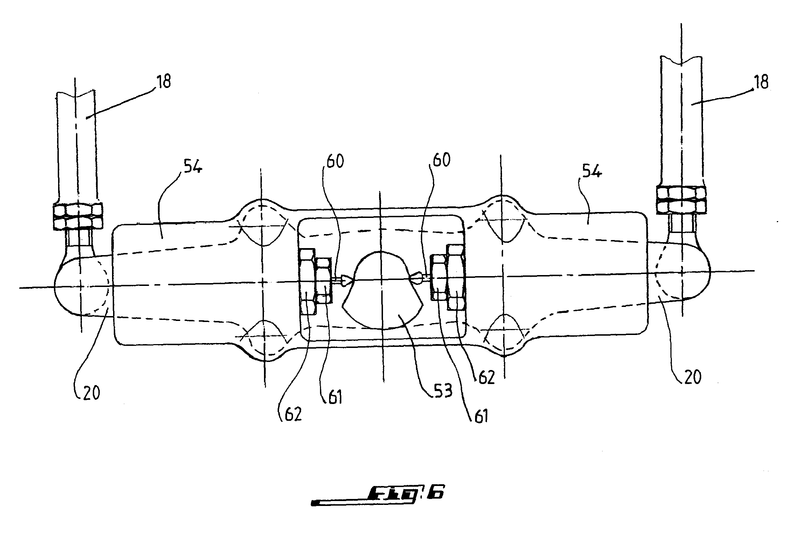

Ce dispositif comprend suivant le premier mode de réalisation représenté aux figures 1 à 10, deux basculeurs 12 pouvant pivoter relativement au châssis C autour respectivement de deux axes longitudinaux 13 disposés symétriquement au plan médian vertical P passant par l'axe longitudinal de la tige de vérin 7 de l'amortisseur central 5.

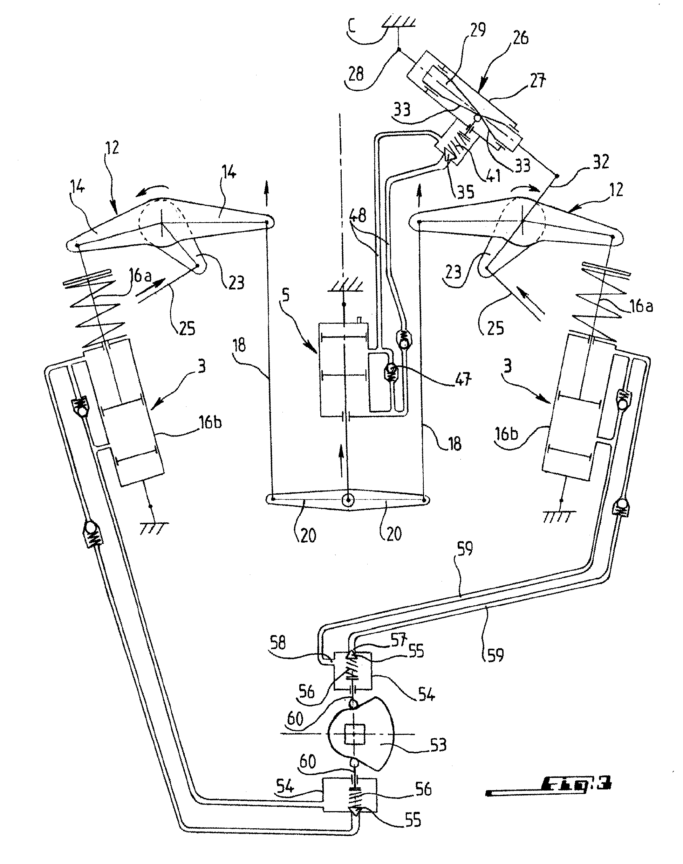

Chacun des deux basculeurs 12 comprend deux bras de leviers opposés 14 dont l'un est relié articulé en 15 à l'extrémité de la tige de piston 16a de l'amortisseur de suspension correspondant 3 et l'autre est relié articulé en 17 à l'extrémité supérieure d'une biellette verticale anti-roulis 18 dont l'extrémité inférieure est reliée articulée en 19 à l'extrémité d'un bras de levier d'anti-roulis correspondant 20 solidaire de l'extrémité de la barre anti-roulis 4 transversalement à celle-ci. Les deux bras de leviers d'anti-roulis 20 sont diamétralement opposés l'un et l'autre et solidarisés à la barre anti-roulis 4 par une liaison à cannelures 21. La figure 5 montre que l'articulation de chaque biellette 18 au bras du levier correspondant 20 est assurée par une rotule 22.

Chacun des deux basculeurs 12 comprend en outre un troisième bras de levier 23 dont l'extrémité est reliée articulée en 24 à l'extrémité d'une tige 25 dont l'extrémité opposée est reliée articulée à l'élément de suspension de la roue correspondante, dans le cas présent le triangle inférieur de suspension (non représenté), de manière que la tige 25 puisse faire pivoter le basculeur 12 autour de l'axe 13 suivant les débattements verticaux de la roue.

En fait, le dispositif d'anti-détente auto adaptatif en pompage et en roulis de l'invention comprend deux systèmes indépendants permettant de contrôler d'une part le pompage et le cabrage du véhicule en agissant sur la détente basse vitesse de l'amortisseur central 5 et d'autre part le roulis du véhicule en agissant sur la détente basse vitesse des amortisseurs 3 des roues avant du véhicule.

Le système 26 permettant de contrôler le pompage et le cabrage de l'essieu avant du véhicule comprend un corps généralement cylindrique 27 dont une extrémité est reliée articulée en 28 au châssis C du véhicule et un axe de commande 29 monté à coulissement guidé en translation longitudinalement dans le corps 27 par l'intermédiaire de paliers opposés 30. L'extrémité de l'axe de commande 29 faisant saillie du corps 27 est reliée articulée en 31, par exemple par une rotule, à l'un ou l'autre des deux basculeurs 12 associés respectivement aux roues droite et gauche comme représenté aux figures 1 et 3, par l'intermédiaire d'un autre bras de levier 32 solidaire du basculeur 12.

L'axe de commande 29 comporte deux rampes 33 divergeant l'une de l'autre à partir d'un plan transversal à l'axe longitudinal de l'axe de commande 29 et pouvant agir sur l'extrémité d'une tige ou aiguille de poussée 34 en contact permanent avec l'axe 29 de manière à contrôler l'ouverture du clapet de détente basse vitesse 35 de l'amortisseur central 5 et logé avec la tige 34 dans un corps 36 solidaire de façon déportée du corps 27 du système ou actionneur 26. Le boîtier 36 renferme également le clapet 37 de détente haute vitesse et deux écrous externes 38, 39 sont prévus pour régler respectivement les basse et haute vitesses de détente des clapets 35, 37 comme cela est connu en soi. Un doigt d'indexage 40 est prévu pour bloquer le système 26 en position statique pour effectuer les réglages nécessaires.

Le clapet de détente basse vitesse 35 est rappelé élastiquement par un ressort de compression 41 contre un siège d'un orifice 42 pour fermer celui-ci à une valeur de compression du ressort 41. Chaque rampe 33 lors du déplacement en translation de l'axe de commande 29 dans le corps 27 à partir de sa position de référence de la figure 4, exerce sur la tige de poussée 34 un effort axial permettant de comprimer davantage le ressort 41 et, par conséquent, de s'opposer davantage au soulèvement du clapet 35 de son siège de manière à durcir la détente basse vitesse de l'amortisseur 5 comme on le verra ultérieurement.

L'amortisseur central 5 est pourvu d'un corps 43 solidaire de façon déportée du cylindre 6 de l'amortisseur 5 et contenant les moyens classiques à clapets de réglage de compression basse et haute vitesses de l'amortisseur 5, ce réglage étant effectué par l'écrou de réglage basse vitesse 44 et l'écrou de réglage haute vitesse 45 agissant sur les clapets respectifs 46 et 47 comme cela est connu en soi.

Le corps 36 contenant les clapets de réglage basse et haute vitesses 35, 37 est relié à l'amortisseur 5 par des conduites 48.

L'amortisseur central 5 est du type hydraulique à double effet, tout comme les deux amortisseurs de roues 3 et comporte un piston flottant 49 entre le piston 50 solidaire de la tige 7 de l'amortisseur 5 et le fond de corps d'amortisseur 6, du gaz, tel que de l'azote, se trouvant entre le piston flottant 49 et le fond du corps d'amortisseur 6.

Le système permettant de contrôler le roulis du véhicule comprend un axe rigide 51 logé coaxialement dans la barre creuse anti-roulis 4 et dont une extrémité est bloquée en translation et en rotation par la vis 52 permettant de bloquer la barre 4 à l'axe 9 de façon que l'axe 51 et la barre anti-roulis 4 puissent pivoter concomitamment dans le palier de support 10 dans un plan vertical. L'extrémité libre de l'axe 31 faisant saillie de la barre anti-roulis 4 porte solidairement de celle-ci une came 53 s'étendant perpendiculairement à l'axe 51. La came 53 peut être solidarisée en rotation à l'extrémité de l'axe 51 par un carré d'entraînement.

Le système de contrôle du roulis comprend en outre deux corps 54 solidaires respectivement des deux bras de levier 20 de la barre anti-roulis 4, l'un comportant les moyens de réglage de la détente basse vitesse de l'amortisseur 3 de la roue gauche, l'autre contenant les moyens de réglage de la détente basse vitesse de l'amortisseur 3 de la roue droite.

Chaque corps 54 contient ainsi un clapet ou vanne 55 rappelé par un ressort de compression 56 sur un siège de fermeture de l'orifice 57 d'entrée du fluide hydraulique provenant du circuit de détente de l'amortisseur 3, le corps 54 comprenant un orifice de sortie 58 du fluide hydraulique de ce circuit de détente qui comprend en outre les deux conduites 59 reliant les orifices d'entrée et de sortie 57 et 58 à l'amortisseur 3.

Chaque corps 54 contient en outre une tige ou aiguille de poussée 60 comprimant le ressort 56 et dont l'extrémité faisant saillie du corps 54 est en appui sur le profil externe de la came 53 sous l'action du ressort 56. Chaque corps 54 est pourvu extérieurement de deux écrous 61, 62 de réglage respectivement de la détente basse et haute vitesses de l'amortisseur de roue correspondant 3. Les deux corps 54 peuvent se déplacer autour d'un embout cylindrique 53a de la came 53 par l'intermédiaire d'un roulement à billes 63 lors d'une torsion appliquée à la barre anti-roulis 4. De la sorte, la came 53 est retenue axialement relativement à l'axe 51.

Avant de décrire le fonctionnement du dispositif de l'invention, on rappellera que les mouvements de pompage, de tanguage et de roulis du véhicule sont contrôlés par les basses vitesses des amortisseurs 3, 5 et le tarage de base, par le ressort de compression 41 de la détente basse vitesse de l'amortisseur central 5 est important pour limiter la vitesse de remontée de l'avant du véhicule.

Les figures 1 à 6 représentent le dispositif d'anti-détente en position statique à laquelle le véhicule a une assiette de référence.

Lorsque le véhicule effectue un freinage en ligne droite pour aborder une courbe ou un virage, un transfert de charge s'effectue de l'arrière vers l'avant du véhicule proportionnellement à la décélération de celui-ci, ce qui entraîne une compression de la suspension avant en principe uniformément sur les amortisseurs 3 des roue droite et gauche et une détente de la suspension arrière : c'est le phénomène de pompage du véhicule. Ainsi, durant cette phase de freinage, le véhicule présente une assiette piqueuse ayant pour effet d'améliorer la charge aérodynamique sur l'avant du véhicule.

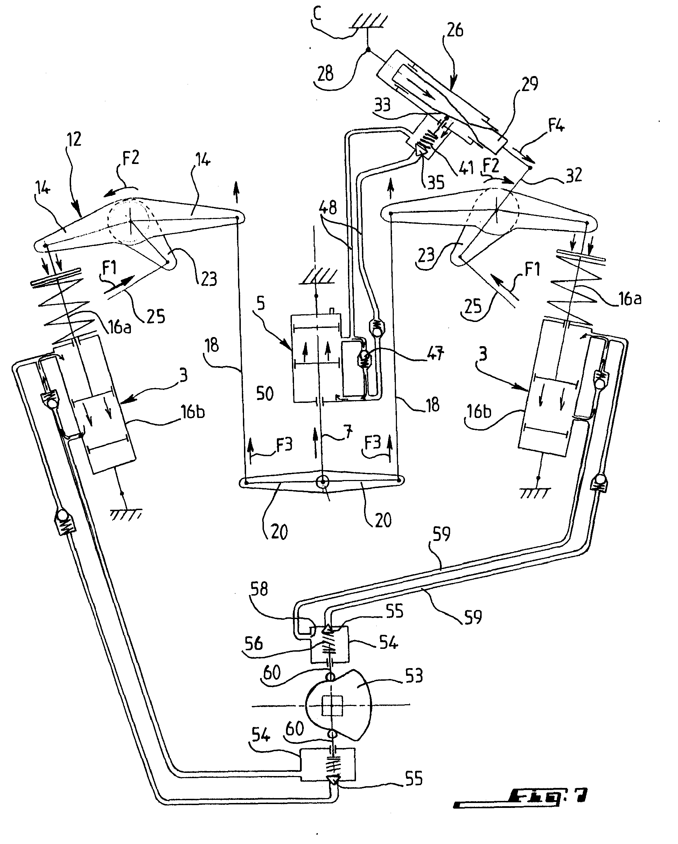

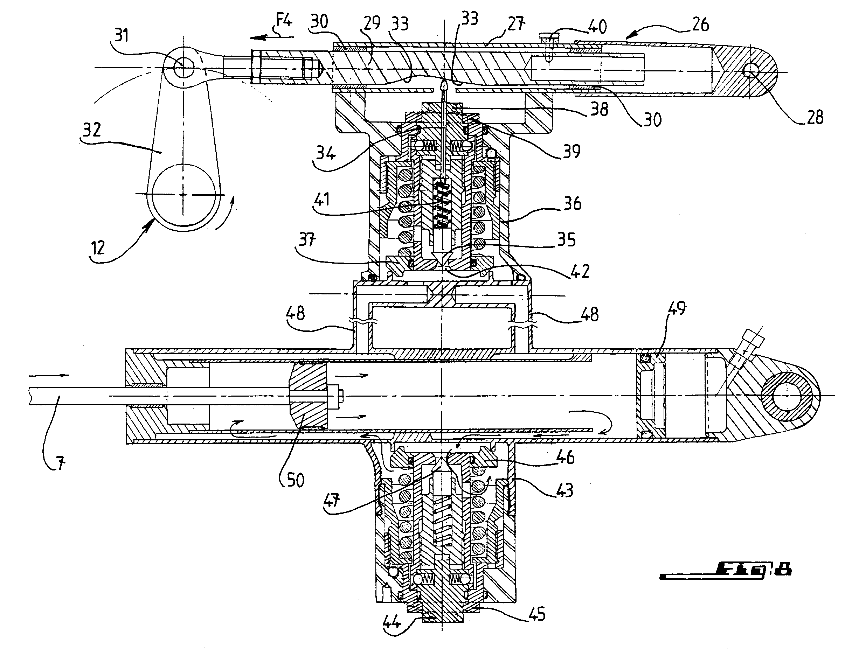

En se référant aux figures 7 et 8, lors de la compression de la suspension avant se traduisant par le pompage du véhicule, les deux tiges 25 répercutent les débattements vers le haut des roues gauche et droite en exerçant un effort de poussée sur les deux basculeurs comme indiqué par les flèches F1, provoquant le pivotement de ceux-ci dans le sens indiqué par les flèches F2, dont les bras de leviers 14 entraînent d'un côté le déplacement des tiges de piston 16a des deux amortisseurs de roues 3 dans le sens de leur compression et de l'autre côté exercent une traction vers le haut comme indiqué par les flèches F3 sur les bras de leviers 20 de la barre anti-roulis 4 par l'intermédiaire des biellettes 18 provoquant le pivotement de la barre anti-roulis 4 vers le haut et le déplacement concomittant de la tige de piston 7 de l'amortisseur 5 pour amener ce dernier à un état de compression. Simultanément, l'axe de commande 29 à rampes 33 est déplacé dans le sens indiqué par la flèche F4 par le bras de levier 32 du basculeur 12 associé à l'un des amortisseurs de la roue gauche ou droite de manière que la rampe correspondante 33 d'une pente définissant une loi prédéterminée provoque un déplacement suivant son axe de la tige de poussée 34 pour comprimer ainsi davantage le ressort 41 à une valeur de tarage de fermeture du clapet 35 d'une valeur supérieure à la valeur de tarage de référence. Cette augmentation du tarage du ressort de compression du clapet de détente basse vitesse 35 empêche une détente de la pression du fluide dans la chambre de détente de l'amortisseur 5 tant que la pression dans le circuit de détente ne dépasse pas la valeur de tarage de ressort de compression fixée par la rampe 33 de l'axe de commande 29. De la sorte, l'amortisseur central 5 est bloqué en compression du fait que les détentes basses vitesses sont plus ou moins bridées ou durcies et que le véhicule garde une assiette piqueuse après la fin de la phase de freinage en ligne droite du véhicule.

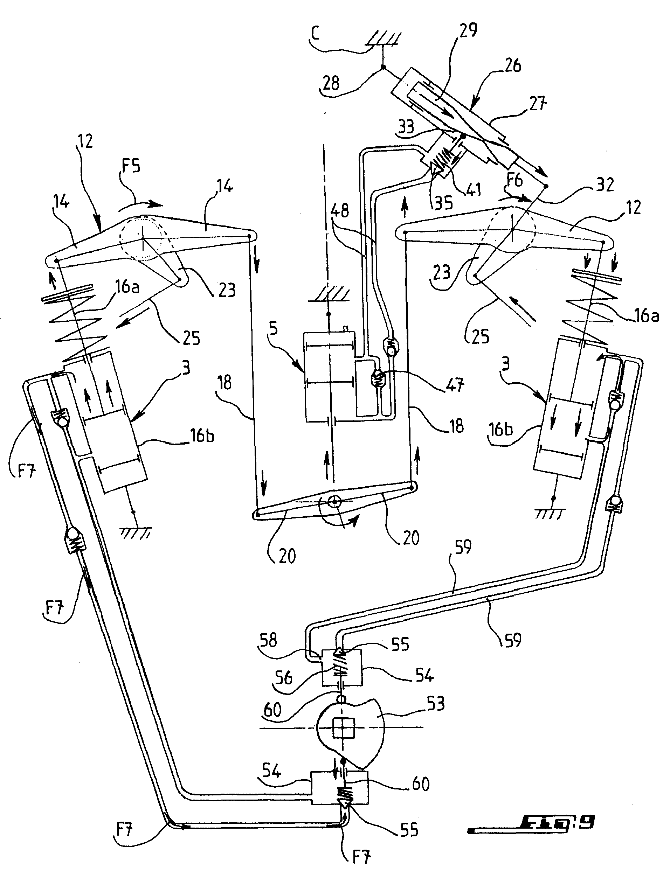

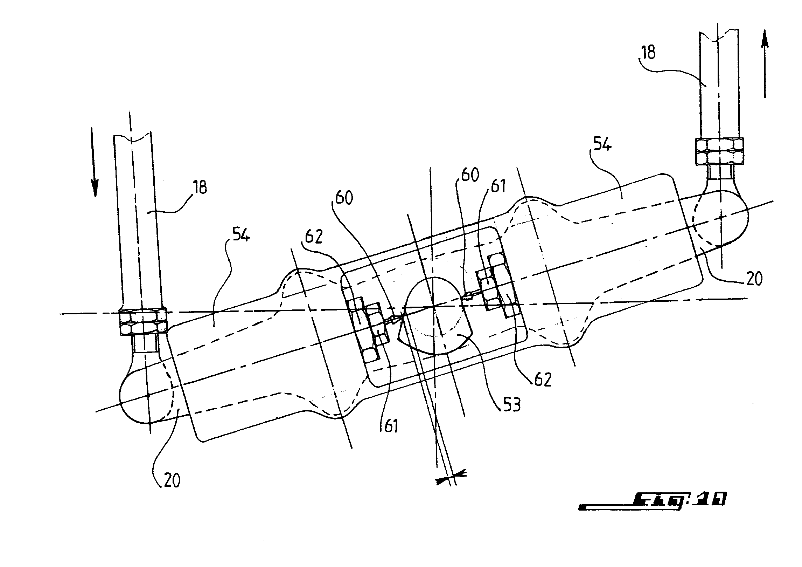

Les figures 9 et 10 représentent le dispositif en situation de roulis du véhicule dans un virage ou une courbe. En règle générale, après un freinage en ligne, et le cas échéant, jusqu'à la corde du virage, le véhicule s'inscrit dans un virage ou une courbe en phase d'accélération progressive. Dans le cas du déplacement du véhicule dans un virage à droite après la phase de freinage comme représenté en figure 9, le transfert de charge lié à l'accélération latérale du véhicule entraîne la compression de l'amortisseur 3 de la roue gauche représenté à droite sur cette figure et la détente de l'amortisseur de suspension de la roue droite situé à gauche de cette figure. Cette figure montre ainsi que la tige 25 associée au basculeur 12 de la roue droite exerce une traction sur le basculeur pour le faire pivoter dans le sens indiqué par la flèche F5 de manière à entraîner la détente de l'amortisseur 3 de la roue droite tandis que la tige 25 de l'autre basculeur 12 exerce une poussée de celui-ci dans le sens indiqué par la flèche F6 pour mettre en compression l'amortisseur 3 de la roue gauche. Le basculement suivant la flèche F6 du basculeur 12 comprimant l'amortisseur 3 de la roue gauche maintient, voir même accentue le déplacement de l'axe de commande 29 du système d'anti-détente de l'amortisseur central 5, ce qui maintient ou augmente le durcissement par la tige de poussée 34 de la détente basse vitesse de l'amortisseur 5, permettant de la sorte de maintenir l'assiette piqueuse du véhicule et de maintenir un bon niveau de charge aérodynamique à celui-ci.

En outre, la prise de roulis, qui est partiellement contrôlée par le dispositif anti-roulis de réglage hydraulique de base de la suspension avant, déclenche également une action de la barre anti-roulis 4. En effet, la compression de l'amortisseur d'une roue et la détente de l'amortisseur de l'autre roue entraîne une torsion de la barre anti-roulis 4 par l'intermédiaire de la rotation des bras de levier 20 commandée par les biellettes 18 reliées aux basculeurs 12. Comme représenté en figure 10, la rotation des bras de levier 20 de la barre anti-roulis 4 et sur lesquels sont fixés les deux corps 54 à moyens d'anti-détente des amortisseurs 3 des deux roues, provoque une rotation des deux tiges de poussée 60 autour de la came fixe 53 sur le profil de celle-ci tel qu'il définit une loi permettant l'enfoncement de la tige de poussée 60 du clapet de détente 55 associé à l'amortisseur de roue droite en détente et le maintien de l'autre tige de poussée 60 à sa position de référence. Ceci a pour effet de durcir la détente basse vitesse de l'amortisseur de la roue droite et ainsi de limiter la prise de détente de celui-ci comme indiqué par les flèches F7 représentant le sens de circulation du fluide hydraulique de détente de l'amortisseur de la roue droite et qui est interrompu par le clapet anti-détente 55 associé à la tige de poussée 60 enfoncée par le profil de came de la came 53 amenant le ressort associé 56 à être comprimé à une valeur supérieure à la valeur de tarage de base. Ceci permet de limiter la prise de roulis du véhicule sans adopter des barres anti-roulis présentant de fortes sections défavorables pour une bonne adhérence des roues du véhicule en virage ou en courbe.

Par conséquent, durant cette phase de roulis, le véhicule maintient une certaine assiette piqueuse et limite sa prise de roulis liée au passage d'un virage ou d'une courbe en phase d'accélération et maintient également une certaine charge aérodynamique favorable sur l'essieu avant.

Une fois que le véhicule a franchi le virage ou la courbe, il revient en ligne droite et par conséquent le roulis redevient nul. Lorsqu'il n'y a plus de roulis, les deux bras de levier 20 de la barre d'anti-roulis 4 reviennent à leur position statique et par l'intermédiaire de la came 53 et des tiges de poussée des clapets ou vannes 55, relibèrent les basses vitesses de détente des amortisseurs des roues droite et gauche. La position des deux basculeurs 12 redevient identique et symétrique tandis que l'assiette du véhicule est toujours plus ou moins piqueuse de part l'efficacité du verrouillage de détente basse vitesse de l'amortisseur central 5. Les efforts liés à l'accélération et la libération croissante des détentes basses vitesses de l'amortisseur central 5 ramènent tranquillement le véhicule à son assiette de référence afin de limiter la charge aérodynamique en ligne droite et les basculeurs reviennent à leur position statique ainsi que l'axe de commande 29 des moyens d'anti-détente auto adaptif de l'amortisseur central 5.

Lors du passage du véhicule d'un virage à un autre (chicane), l'axe de commande 29 du dispositif d'anti-détente de l'amortisseur central 5 est réversible. Ainsi, lorsqu'une roue bascule d'un état de compression de son amortisseur à un état de détente de celui-ci lié à un changement de direction et donc du sens des efforts latéraux, le basculeur correspondant 12 change de position, entraînant une translation de l'axe de commande 29. Suivant une loi bien définie par les rampes 33, l'axe de commande 29 passe par un point neutre (position statique), puis bascule de l'autre côté afin de continuer le bridage ou durcissement des détentes basses vitesses de l'amortisseur central 5 afin de garantir une assiette stable du véhicule malgré son changement de direction.

Le dispositif de l'invention présente les avantages suivants :
- il maintient une certaine souplesse (réglage de base) des basses vitesses de amortisseurs des roues et notamment de l'amortisseur qui est en compression et qui ne limite donc pas son changement d'état rapide (passage de la compression à la détente) lors d'un changement de cap ;
- il maintient une certaine position relative de l'avant du véhicule par rapport au sol (optimum en fonction des caractéristiques aérodynamiques souhaitées) dans toutes les phases de passage d'un virage ou d'une courbe et assure un maximum de performances globales (maximum de charge aérodynamique qui assure un maximum de charge et d'adhérence mécanique) ;
- il limite la prise de roulis et par conséquent permet d'abaisser le centre de gravité en courbe et en virage, ce qui va dans le sens de l'optimisation des performances de l'essieu du véhicule ; et
- il autorise une grande plage de réglage et d'optimisation.

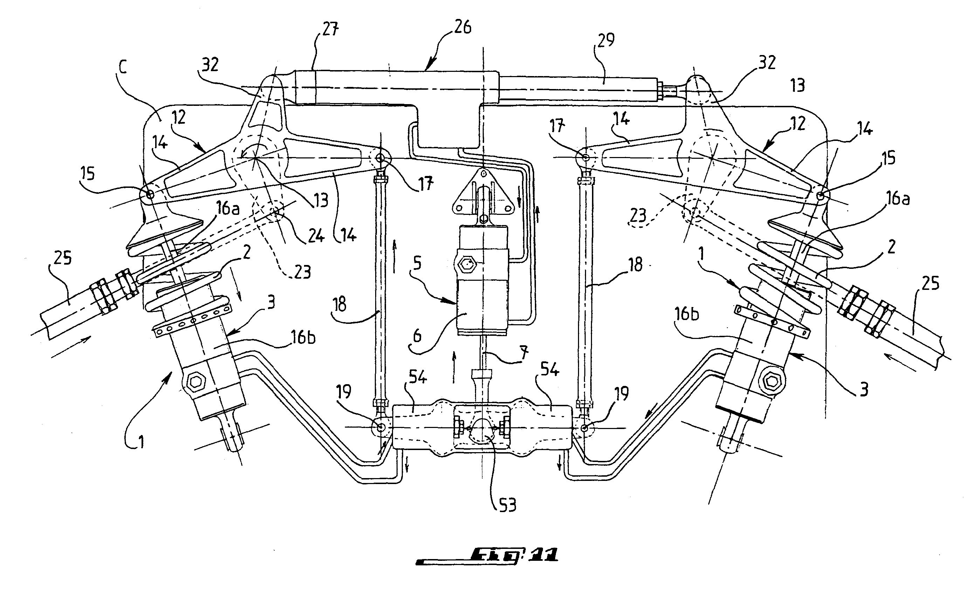

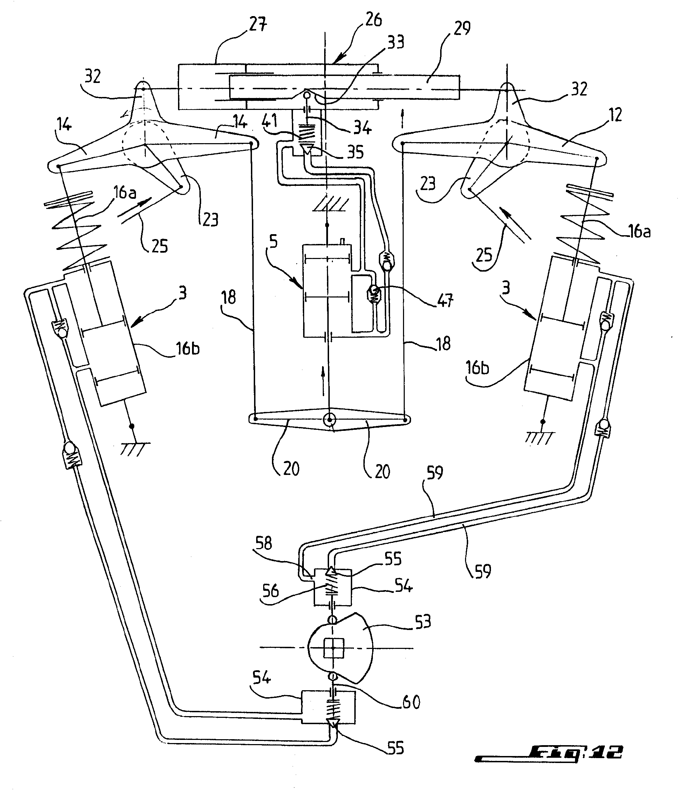

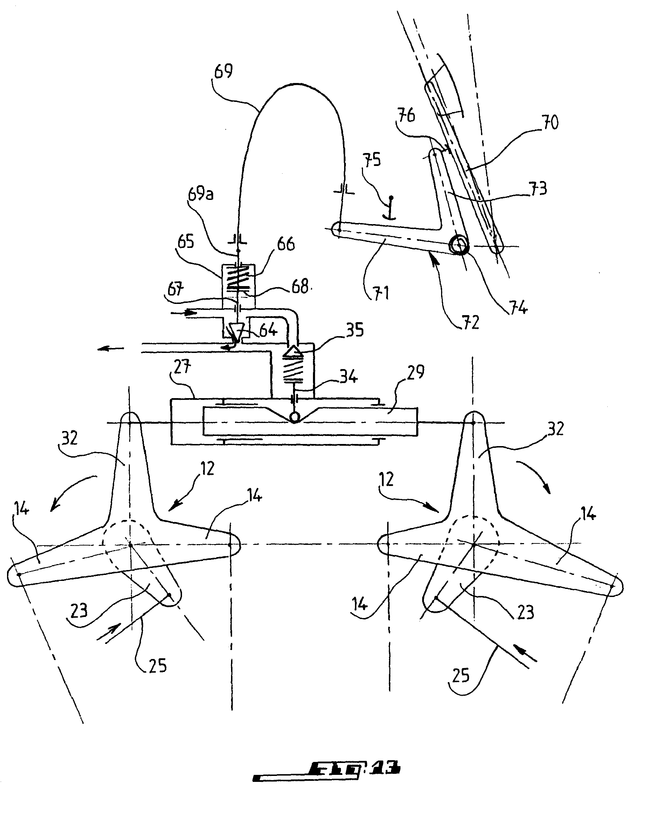

Le dispositif faisant l'objet du second mode de réalisation représenté aux figures 11 à 17 diffère de celui du premier mode de réalisation en ce que les deux basculeurs 12 comportent chacun un bras de levier 32, dont l'un est relié articulé à l'extrémité de l'axe de commande 29 du système d'anti-détente 26 de l'amortisseur central 5 et l'autre est relié articulé au corps 27 de ce système. Le dispositif de ce second mode de réalisation diffère en outre par la présence d'une vanne ou clapet 64 de libération de détente disposé en parallèle, dans le circuit de détente basse vitesse de l'amortisseur central 5, au clapet d'anti-détente 34 de l'amortisseur 5. Le clapet 64 est logé dans un corps 65 traversé par la conduite d'arrivée du fluide hydraulique vers le clapet anti-détente 34 et est maintenu en appui sur un siège de fermeture d'un orifice communiquant avec la conduite de sortie du fluide hydraulique sous l'action d'une force de rappel exercée par un ressort de compression 66 logé dans le corps 65. Le clapet 64 est solidaire d'une tige 67 pouvant coulisser de façon guidée dans le corps 65 et comprenant une plaque transversale 68 solidaire de celle-ci, le ressort de compression 66 étant monté précontraint entre la plaque 68 et la paroi fermeture du corps 65 opposée au clapet 69. Le clapet 64 est commandé par un câble 69a pouvant coulisser dans une gaine 69b par actionnement de la pédale d'accélérateur 70 du véhicule. Le câble 69a a l'une de ses extrémités reliée à la tige 67 et son extrémité opposée reliée à l'extrémité d'un bras 71 d'un basculeur 72 monté pivotant autour d'un axe longitudinal solidaire du châssis du véhicule et comportant un second bras 73 à l'extrémité duquel peut agir la pédale d'accélérateur 70. Un ressort en spirale 74 est monté entre l'axe de pivotement du basculeur 72 et le basculeur de manière à rappeler élastiquement ce dernier à une position de repos à laquelle le bras 71 est en appui sur une butée fixe 75 correspondant à la position de fermeture du clapet 64. Lorsque la pédale d'accélérateur est pratiquement complètement enfoncée, le basculeur 72 est déplacé dans le sens contraire des aiguilles d'une montre par rapport à la figure 13 de manière que le bras 71 exerce une traction sur le câble 69a provoquant une ouverture de la vanne 64. Cette dernière constitue une vanne de détente libre comme on le verra ultérieurement.

Le bras 73 comporte à son extrémité libre une butée réglable 76 permettant de régler l'angle d'inclinaison de la pédale d'accélérateur 70 à partir duquel elle actionne le câble 69 d'ouverture de la vanne 64. De préférence, la butée 76 est réglée de manière à actionner le câble 69 lorsque la pédale d'accélérateur 70 se trouve dans une plage de position comprise entre 90% et 100% de son enfoncement.

En fonctionnement normal, c'est-à-dire lorsque le véhicule se déplace en ligne droite en accélération et que la pédale d'accélérateur est complètement enfoncée, le circuit de détente basse vitesse de l'amortisseur central 5 est maintenu ouvert par la vanne de libération de détente 64 commandée par la pédale 70 comme cela est représenté en figure 13.

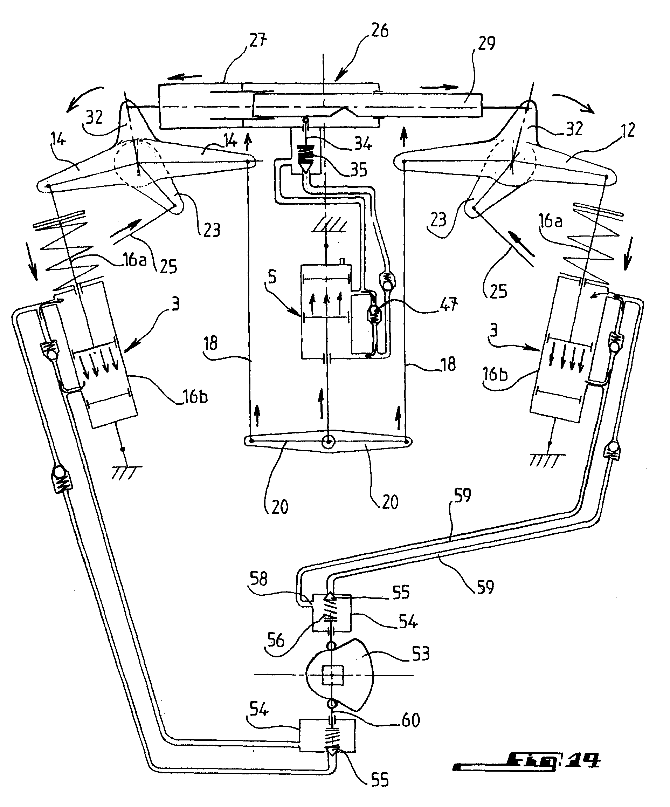

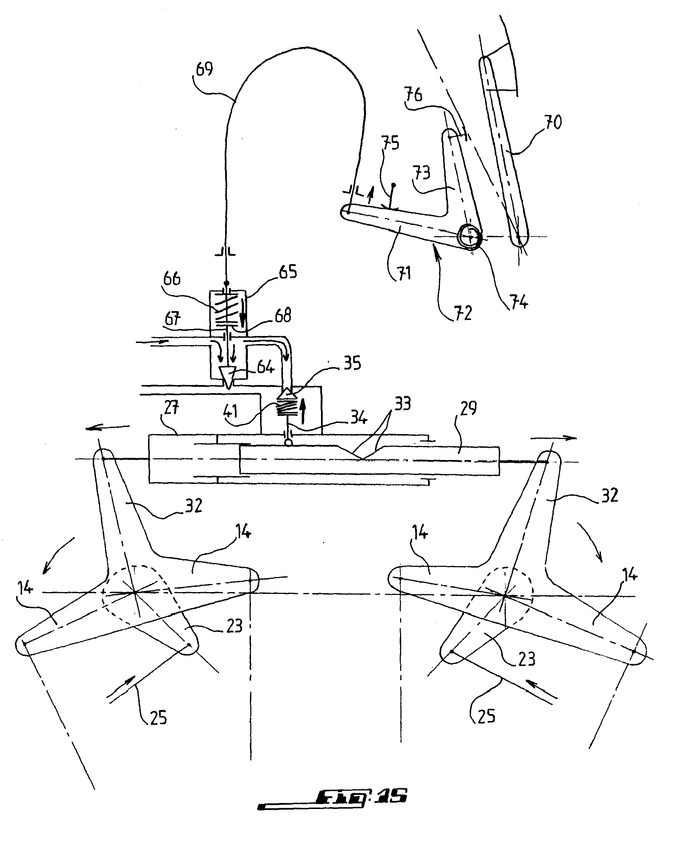

Le fonctionnement en pompage pur du dispositif de ce second mode de réalisation et correspondant à un freinage en ligne droite du véhicule avant d'aborder un virage ou une courbe est représenté en figure 14 et correspond pratiquement à celui du dispositif du premier mode de réalisation représenté en figure 7. La seule différence réside dans le fait que le basculement des basculeurs 12 permettant d'amener à l'état de compression les deux amortisseurs de roue 3 provoque le coulissement l'un par rapport à l'autre et de sens opposés l'axe de commande 29 et le corps 27 du système anti-détente 26 de l'amortisseur 5. La figure 15 montre que lors du freinage en ligne droite du véhicule, la pédale d'accélérateur 70 étant relâchée, la vanne de détente 64 occupe sa position de fermeture et le clapet d'anti-détente 35 occupe sa position de durcissement de détente basse vitesse de l'amortisseur central 5 comme dans le premier mode de réalisation.

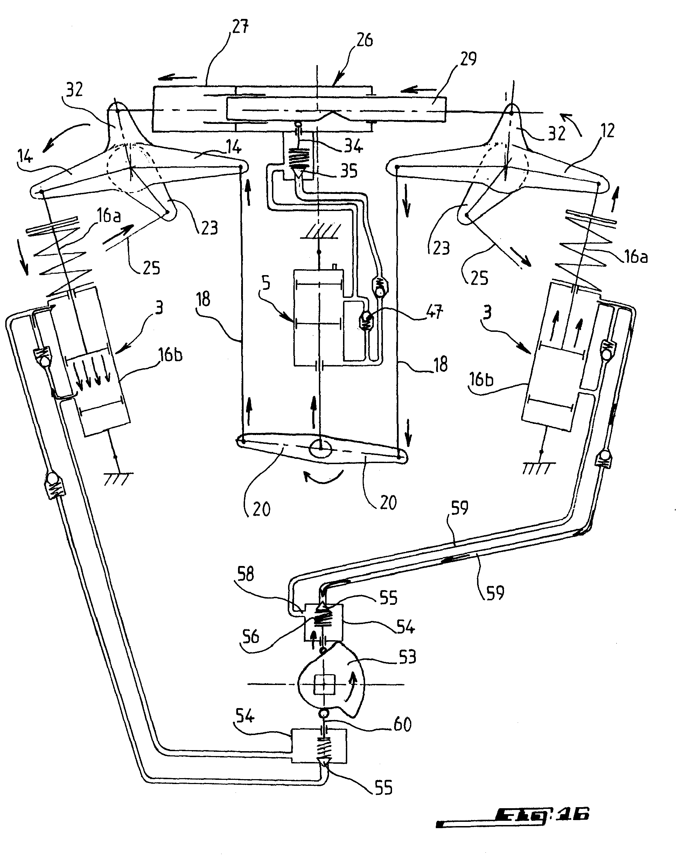

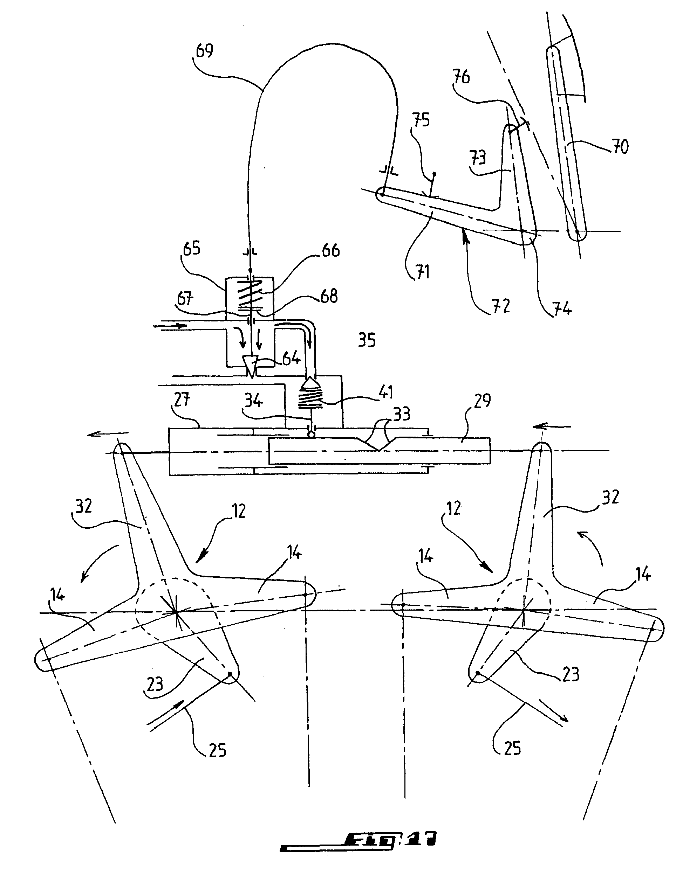

La figure 16 représente le dispositif du second mode de réalisation lorsque le véhicule se déplace en virage en accélération progressive. Le fonctionnement en roulis du dispositif de la figure 16 est pratiquement le même que celui du dispositif du premier mode de réalisation de la figure 9 mis à part le fait que la compression de l'amortisseur 3 de la roue gauche maintient, voire même accentue le déplacement du corps 27 du système anti-détente 26 et la détente de l'amortisseur 3 de la roue droite maintient, voire même entraîne un déplacement de l'axe de commande 29 dans le même sens que le corps, maintenant en position inchangée l'aiguille 34 du clapet 35 relativement à l'axe de commande 29 du fait que le corps 36 de logement de cette aiguille est solidaire du corps 27 du système anti-détente 26, permettant ainsi le maintien du durcissement de détente basse vitesse de l'amortisseur 5. En conséquence, l'assiette piqueuse et basse du véhicule est maintenue avec maintien concomitant d'un bon niveau de charge aérodynamique. Cette situation est reflétée également par la figure 17 qui montre que le clapet anti-détente 35 est maintenu à sa position de durcissement de la détente par l'axe de commande 29 augmentant la compression du ressort 41.

Une fois le véhicule en position ligne droite sorti du virage, le conducteur enfonce la pédale d'accélérateur 70 pratiquement complètement de manière à faire basculer le basculeur 72 dont le bras 71 exerce une traction sur le câble 69a commandant l'ouverture de la vanne de détente 64 de l'amortisseur central 5, permettant ainsi de libérer les basses vitesses de détente de cet amortisseur. Ce dernier se détend et permet le retour de la suspension à la position statique des figures 11 et 12 et les basculeurs 12 reviennent à leur position statique ainsi que l'axe de commande 29 du système anti-détente auto-adaptif 26 de l'amortisseur central 5.

Lors du passage du véhicule d'un virage à un autre tel que par exemple en chicane, une roue bascule d'un état de compression à un état de détente lié à un changement de direction donc du sens des efforts latéraux et les basculeurs changent de position entraînant une translation de l'ensemble du corps 27 et de l'axe commande 29 du système anti-détente 26 de l'amortisseur central 5. Par conséquent, il n'y a pratiquement pas de déplacement de la tige de poussée 34 par rapport à l'axe de commande 29, plus de passage par un état neutre, permettant ainsi de maintenir le durcissement de détente basse vitesse de l'amortisseur central 5 et donc de maintenir l'assiette du véhicule piqueuse basse pour garder la charge aérodynamique à l'avant du véhicule.

Autrement, le dispositif du second mode de réalisation présente les mêmes avantages que celui du premier mode de réalisation.

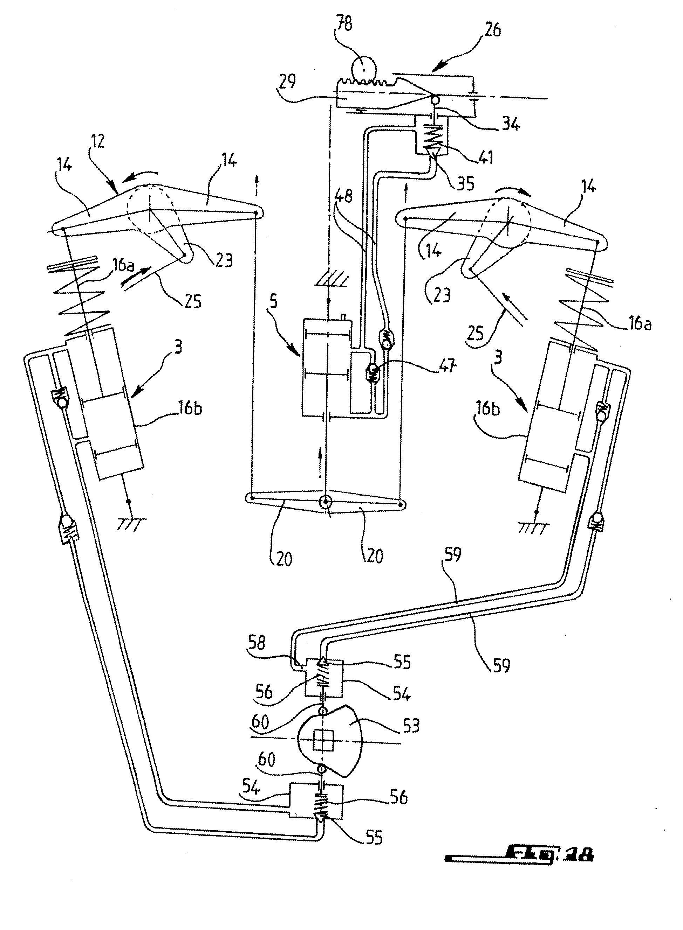

Le dispositif faisant l'objet du troisième mode de réalisation des figures 18 à 22 ne diffère de ceux des premier et second modes de réalisation en ce que l'actionneur constitué par le système anti-détente 26 est piloté électriquement au lieu d'être piloté mécaniquement.

A cet effet, l'actionneur comprend un moteur électrique pas à pas 77, pouvant être remplacé par un vérin électrique, pouvant entraîner un pignon 78 en engrènement avec une crémaillère 79 de l'axe de commande 29 pour entraîner en translation cette dernière dans un sens ou dans l'autre suivant le sens de rotation du pignon 78.

Le moteur électrique 77 peut être piloté par deux circuits électriques d'alimentation comprenant un premier circuit 80 et un second circuit 81. Le premier circuit 80 d'alimentation du moteur 77 comporte deux contacteurs en série 82 et 83, le contacteur 82 étant placé à un emplacement approprié sur la crémaillère de direction du véhicule afin d'occuper une position de fermeture du circuit lorsque le véhicule est en position de ligne droite suivant une tolérance de position de plus ou moins deux degrés d'angle de braquage des roues imposé par la crémaillère de direction et le second contacteur 83 est placé sur la pédale d'accélérateur 70 du véhicule de manière à occuper une position de fermeture du circuit d'alimentation du moteur 77 lorsque la pédale d'accélérateur est pratiquement complètement enfoncée et, de préférence, occupe une position d'enfoncement comprise entre 90% et 100% de son enfoncement complet correspondant à une accélération à fond du véhicule.

Le second circuit 81 comporte un seul contacteur 84 placé sur la pédale de frein 85 du véhicule pour fermer le contacteur 84 lorsque la pédale de frein 85 est actionnée.

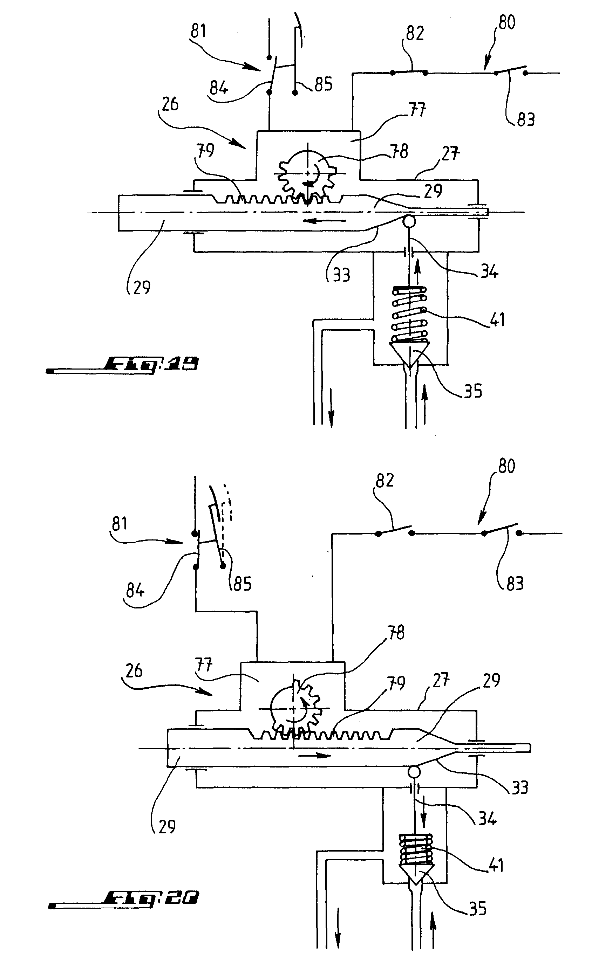

En position statique représentée en figure 19, la crémaillère de direction 79 occupe sa position de ligne droite à laquelle le contacteur 82 est fermé et la pédale d'accélérateur est pratiquement complètement enfoncée pour fermer l'autre contacteur 83, de sorte que le moteur pas à pas 77 est alimenté pour disposer l'axe de commande 29 à une position de référence à laquelle la rampe 33 n'exerce pas de compression sur le ressort de tarage 41 du clapet 35 via la tige de poussée 34 du mécanisme de réglage de détente basse vitesse de l'amortisseur central 5. Ainsi, à cette position de référence de l'axe de commande 29, aucune action de durcissement des détentes basse vitesse n'est exercée sur le clapet 35 de sorte que le véhicule se trouve à son assiette de référence à l'instant t et il n'y a donc pas de contrôle de la hauteur de caisse du véhicule.

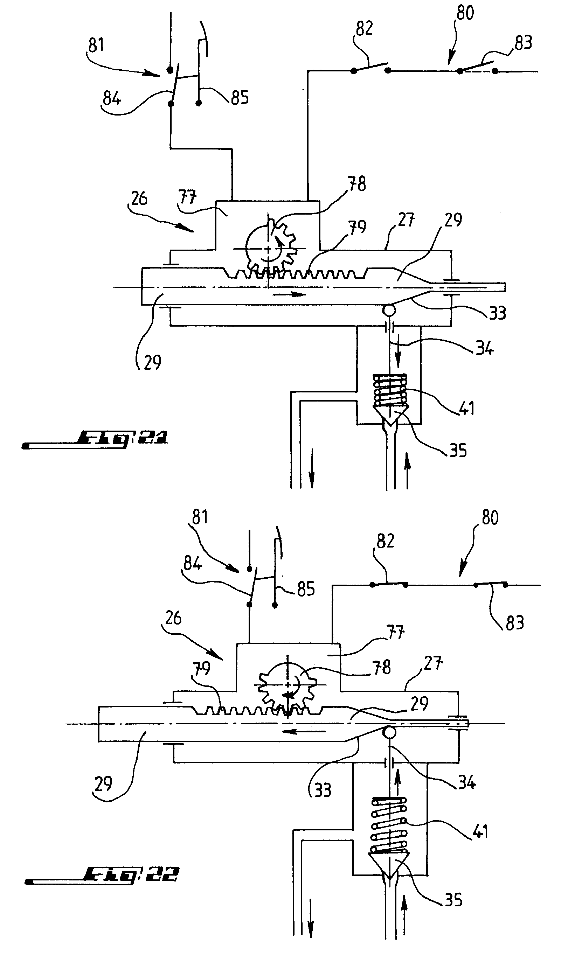

La figure 20 représente le dispositif en situation de freinage en ligne droite pour aborder un virage ou une courbe (pompage pur). Dans cette situation, le conducteur du véhicule a relâché la pédale d'accélérateur pour provoquer l'ouverture du contacteur 83 et exerce une pression sur la pédale de frein 85 provoquant la fermeture du contacteur 84 de sorte que le second circuit 81 alimente électriquement le moteur pas à pas 77 qui entraîne le pignon 78 dans le sens contraire des aiguilles d'une montre pour déplacer en translation l'axe de commande 29 vers la droite par rapport à la figure 20. La rampe 33, qui définit une loi déterminée, exerce une poussée sur la tige 34 qui comprime le ressort 41 pour provoquer un durcissement via le clapet 35 des détentes basses vitesses de l'amortisseur central 5 comme dans les deux modes de réalisation précédents. Ainsi, le véhicule présente une assiette piqueuse et basse.

La figure 21 représente la situation selon laquelle le véhicule se déplace en virage ou en courbe ou dans une chicane. Dans cette situation, le contacteur 82 de la crémaillère de direction est ouvert et le contacteur 84 de la pédale de frein est également ouvert de sorte que le moteur pas à pas 77 n'est plus du tout alimenté et maintient l'axe de commande 29 à sa position de compression durcie du ressort 41, maintenant le clapet 35 a sa position de fermeture de durcissement des détentes basses vitesses de l'amortisseur central 5. Ainsi, l'assiette piqueuse du véhicule est maintenue.

La figure 22 représente la situation selon laquelle le véhicule revient à sa position de ligne droite et est accéléré pratiquement à fond. Dans cette situation, le contacteur 84 de la pédale de frein est ouvert et les deux contacteurs 82, 83 du premier circuit électrique sont tous les deux fermés pour alimenter le moteur pas à pas 77 et entraîner via le pignon 78 l'axe de commande 29 vers la gauche par rapport à la figure 22 pour désengager la rampe 33 de l'extrémité de la tige 34 qui se déplace vers le haut par rapport à cette figure pour libérer ainsi les détentes basses vitesses de l'amortisseur central 5. De la sorte, le véhicule retourne à une assiette de référence et la charge aérodynamique en ligne droite du véhicule est limitée. La vitesse de retour à l'état de référence de l'assiette du véhicule est gérée par la vitesse de déplacement de l'axe de commande 29 et la loi de déplacement de la tige de poussée 34 imposée par la rampe 33. Le pilotage de la vitesse d'action de l'actionneur 26 est donc un paramètre important pour la mise au point du dispositif de l'invention.

Le troisième mode de réalisation du dispositif de l'invention a pour avantages de remplacer les liaisons mécaniques entre basculeurs 12 et actionneur 26 par des liaisons électriques, de procurer une grande plage de pilotage du dispositif et d'assurer une meilleure gestion du retour à l'état de référence de l'assiette du véhicule.

## Revendications

1. Dispositif permettant de contrôler la détente basse vitesse des amortisseurs (1 ;5) d'un même essieu avant d'un véhicule en fonction des sollicitations en pompage et en roulis du véhicule, l'essieu comprenant deux amortisseurs (3) de suspension des roues avant droite et gauche du véhicule, un amortisseur central (5) de contrôle du mouvement de pompage de l'essieu et dont le circuit d'alimentation en fluide comporte notamment un clapet de réglage de détente basse vitesse (35) de l'amortisseur central (5), et une barre anti-roulis (4), **caractérisé en ce que** l'amortisseur central (5) est fixé entre le châssis (C) du véhicule et une extrémité libre de la barre anti-roulis (4) dont l'extrémité opposée est montée pivotante autour d'un axe transversal solidaire du châssis, l'extrémité libre de la barre anti-roulis (4) étant solidaire de deux bras de levier transversaux opposés (20) dont les extrémités sont liées mécaniquement aux débattements verticaux respectivement des roues droite et gauche et aux amortisseurs de suspension (3) d'une manière telle que les deux bras de levier (20) de la barre anti-roulis (4) provoquent une compression des amortisseurs de suspension (3) et de l'amortisseur central (5) lors d'un freinage en ligne droite du véhicule pour aborder un virage, et **en ce qu'**il comprend un actionneur (26) pouvant être piloté lors du freinage en ligne droite du véhicule pour maintenir le clapet de réglage de détente basse vitesse (35) de l'amortisseur central (5) à une position de fermeture permettant de bloquer à l'état de compression l'amortisseur central (5) de manière à maintenir une assiette piqueuse du véhicule.

2. Dispositif selon la revendication 1, **caractérisé en ce que** l'actionneur (26) peut être également piloté, lorsque le véhicule se déplace en virage après freinage en ligne droite du véhicule, de manière à maintenir le clapet (35) à sa position fermée de blocage à l'état de compression de l'amortisseur central (5) pour assurer le maintien de l'assiette piqueuse du véhicule, et **en ce qu'**il comprend deux moyens à clapets (55) de réglage de la détente basse vitesse respectivement des deux amortisseurs de suspension (3), solidaires respectivement des deux bras de levier (20) de la barre anti-roulis (4) et qui peuvent tourner avec la barre anti-roulis (4) autour d'une came (53) fixe en rotation relativement à la barre anti-roulis (4) lors du déplacement en virage du véhicule de manière à forcer le clapet (55) associé à l'amortisseur (3) travaillant en détente de la roue à l'intérieur du virage à être maintenu à une position de fermeture s'opposant à la détente basse vitesse de cet amortisseur pour limiter la prise de roulis du véhicule.

3. Dispositif selon la revendication 2, **caractérisé en ce que** la barre anti-roulis (4), qui s'étend longitudinalement au véhicule, est creuse et un axe rigide (51) est logé coaxialement dans la barre anti-roulis (4) en ayant l'une de ses extrémités solidaire de l'extrémité de la barre anti-roulis (4) articulée au châssis (C) du véhicule et son extrémité opposée faisant saillie de la barre anti-roulis (4) portant solidairement la came (53).

4. Dispositif selon la revendication 2 ou 3, **caractérisé en ce que** les deux moyens à clapets (55) de réglage de la détente basse vitesse des deux amortisseurs de suspension (3) sont logés dans deux boîtiers (54) solidaires respectivement des deux bras de levier (20) de la barre anti-roulis (4) et comprennent chacun une tige de poussée (60) dont une extrémité faisant saillie extérieurement du boîtier correspondant (54) est élastiquement en appui par un ressort interne de compression (56) sur le profil de la came (53), lequel ressort de compression (56) est taré pour maintenir le clapet de réglage (55) en position de fermeture et permettre son ouverture en fonctionnement normal de la suspension et peut être comprimé lors du roulis du véhicule pour fermer le clapet (55) de manière à s'opposer à la détente basse vitesse de l'amortisseur correspondant (3).

5. Dispositif selon l'une des revendications précédentes, **caractérisé en ce que** l'amortisseur central (5) a sa tige de piston (7) reliée articulée à l'extrémité libre de la barre anti-roulis (4) et son cylindre (6) relié articulé au châssis du véhicule.

6. Dispositif selon l'une des revendications précédentes, **caractérisé en ce que** les deux bras de levier (20) de la barre anti-roulis (4) ont leurs extrémités reliées de façon articulée respectivement à deux bras (14) de deux basculeurs (12) montés pivotant au châssis du véhicule autour de deux axes (13) parallèles à l'axe longitudinal du véhicule et **en ce que** chaque basculeur (12) comprend un deuxième bras opposé (14) relié de façon articulée à l'extrémité de la tige de piston (16a) de l'amortisseur de suspension correspondant (3) dont le cylindre (16b) est monté articulé à un élément de suspension du véhicule, tel qu'un triangle de suspension.

7. Dispositif selon la revendication 6, **caractérisé en ce que** chaque extrémité d'un bras de levier (20) de la barre anti-roulis (4) est reliée au bras (14) du basculeur correspondant (12) par une biellette verticale (18).

8. Dispositif selon la revendication 6 ou 7, **caractérisé en ce que** chaque basculeur (12) comprend un troisième bras (23) relié de façon articulée à l'élément de suspension correspondant (3) par l'intermédiaire d'une tige (25) transmettant au basculeur (12) les débattements verticaux de la roue associée.

9. Dispositif selon l'une des revendications 6 à 8, **caractérisé en ce que** l'actionneur (26) comprend un axe de commande (29) monté à coulissement guidé dans un corps (27) et dont l'extrémité sortant du corps (27) est reliée articulée à un quatrième bras (32) d'au moins l'un des basculeurs (12), et **en ce que** l'axe de commande (29) comprend au moins une rampe (33) pouvant coopérer avec une tige de poussée (34) à l'encontre de la force de rappel d'un organe élastique (41), tel qu'un ressort de compression, pour maintenir le clapet de réglage de détente basse vitesse (35) de l'amortisseur central (5) à sa position de fermeture bloquant à l'état de compression cet amortisseur.

10. Dispositif selon la revendication 9, **caractérisé en ce que** le corps (27) de l'actionneur (26) est relié articulé à un quatrième bras (32) de l'autre basculeur (12) de manière que lorsque le véhicule se déplace en virage, le pivotement par la barre anti-roulis (4) des deux basculeurs (12) respectivement dans les états de compression et de détente des deux amortisseurs de suspension (3) selon le sens du virage provoque le déplacement en translation dans le même sens du corps (27) et de l'axe de commande (29) de l'actionneur (26) pour maintenir la rampe (33) de l'axe de commande (29) en appui sur la tige de poussée (34).

11. Dispositif selon la revendication 9 ou 10, **caractérisé en ce que** l'ensemble constitué par la tige de poussée (34), l'organe élastique (41) et le clapet (35) de réglage de détente basse vitesse de l'amortisseur central (5) est logé dans un boîtier (36) solidaire du corps (27) de l'actionneur (26).

12. Dispositif selon des revendications 1 à 6, **caractérisé en ce que** l'actionneur (26) est piloté électriquement par deux circuits électriques d'alimentation (80,81), un premier circuit (80) comprenant deux contacteurs en série (82,83) dont l'un (82) occupe une position de fermeture ou d'ouverture suivant que la crémaillère de direction du véhicule occupe ou non sa position en ligne droite du véhicule et l'autre (83) occupe une position de fermeture ou d'ouverture suivant que la pédale d'accélérateur (70) du véhicule est pratiquement complètement enfoncée ou non et un second circuit (81) à un seul contacteur (84) occupant une position fermée ou ouverte suivant que la pédale de frein (85) est actionnée ou non, de sorte que lors d'un freinage en ligne droite du véhicule, seul le deuxième circuit électrique (81) est fermé pour alimenter l'actionneur (26) permettant le déplacement en translation guidée d'un axe de commande (29) dans un corps (27) solidaire du châssis, l'axe de commande (29) comprenant une rampe (33) pouvant coopérer avec une tige de poussée (34) à l'encontre de la force de rappel d'un organe élastique (41), tel qu'un ressort de compression, pour maintenir le clapet (35) de réglage de détente basse vitesse de l'amortisseur central (5) à sa position de fermeture permettant de bloquer à l'état de compression cet amortisseur.

13. Dispositif selon la revendication 12, **caractérisé en ce que** les deux circuits électriques (80,81) sont ouverts lorsque le véhicule se déplace en virage de sorte que l'actionneur (26) n'est plus alimenté et maintient sensiblement l'axe de commande (29) à sa position de fermeture du clapet (35) qu'il occupait lors du freinage du véhicule.

14. Dispositif selon la revendication 12 ou 13, **caractérisé en ce que** seul le premier circuit électrique (80) est fermé lorsque le véhicule accélère en ligne droite pour alimenter l'actionneur (26) permettant le déplacement en translation de l'axe de commande (29) à une position libérant la détente basse vitesse de l'amortisseur central (5) et ramenant le véhicule à une assiette de référence.

15. Dispositif selon l'une des revendications 12 à 14, **caractérisé en ce que** l'actionneur comprend un moteur électrique pas à pas ou un vérin électrique (77) pouvant entraîner en rotation un pignon (78) en engrènement avec une crémaillère (79) de l'axe de commande (29).

16. Dispositif selon l'une des revendications précédentes, **caractérisé en ce qu'**il comprend un clapet de libération de détente basse vitesse (64) disposé en parallèle au clapet de réglage de détente basse vitesse (35) de l'amortisseur central (5) et pouvant être commandé à une position d'ouverture par la pédale d'accélérateur (70) du véhicule pratiquement complètement enfoncée lorsque le véhicule se déplace en accélération en ligne droite pour libérer la détente basse vitesse de l'amortisseur central (5) et permettre le retour de la suspension à sa position statique à laquelle le véhicule occupe une assiette de référence.

17. Dispositif selon la revendication 16, **caractérisé en ce que** le clapet de libération de détente basse vitesse (64) est commandé en position d'ouverture à l'encontre de la force de rappel d'un organe élastique (66), tel qu'un ressort de compression, par un câble (69) relié à une extrémité d'un basculeur (72) monté pivotant au châssis du véhicule et dont l'extrémité opposée coopère avec la pédale d'accélérateur (70) pour basculer entre deux positions respectivement d'ouverture et de fermeture de ce clapet (64).

18. Dispositif selon l'une des revendications précédentes, **caractérisé en ce qu'**en position statique de la suspension à laquelle l'amortisseur central (5) est libre de se détendre à basse vitesse, les bras de levier (20) de la barre anti-roulis (4) occupent une position sensiblement horizontale.

19. Dispositif selon l'une des revendications précédentes, **caractérisé en ce que** les amortisseurs (3 ; 5) sont hydrauliques à double effet.

20. Dispositif selon l'une des revendications précédentes, **caractérisé en ce qu'**il s'applique à un véhicule automobile de compétition.
